(19) Europäisches Patentamt / European Patent Office / Office européen des brevets

(11) **EP 4 020 632 A1**

(12) **EUROPEAN PATENT APPLICATION**
published in accordance with Art. 153(4) EPC

(43) Date of publication:
**29.06.2022 Bulletin 2022/26**

(21) Application number: **20882482.1**

(22) Date of filing: **30.10.2020**

(51) International Patent Classification (IPC):
**H01M 4/36** (2006.01)    **H01M 4/48** (2010.01)
**H01M 4/38** (2006.01)    **H01M 4/62** (2006.01)
**H01M 4/587** (2010.01)   **H01M 4/131** (2010.01)
**C01B 32/19** (2017.01)   **H01M 10/052** (2010.01)

(52) Cooperative Patent Classification (CPC):
**C01B 32/19; H01M 4/131; H01M 4/36; H01M 4/38; H01M 4/48; H01M 4/587; H01M 4/62; H01M 10/052;** Y02E 60/10

(86) International application number:
**PCT/KR2020/015004**

(87) International publication number:
**WO 2021/086098 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.11.2019 KR 20190138874**

(71) Applicant: **LG ENERGY SOLUTION, LTD.**
**Seoul 07335 (KR)**

(72) Inventors:
• **KIM, Dong Hyuk**
  **Daejeon 34122 (KR)**
• **JUN, Gwang Hoon**
  **Daejeon 34122 (KR)**
• **KWON, Won Jong**
  **Daejeon 34122 (KR)**
• **LEE, Yong Ju**
  **Daejeon 34122 (KR)**

(74) Representative: **Hoffmann Eitle**
**Patent- und Rechtsanwälte PartmbB**
**Arabellastraße 30**
**81925 München (DE)**

(54) **ANODE ACTIVE MATERIAL, PREPARATION METHOD THEREFOR, AND ANODE AND SECONDARY BATTERY WHICH COMPRISE SAME**

(57) The present invention relates to a negative electrode active material including a silicon-based core particle and an outer carbon coating layer formed on the silicon-based core particle, wherein the outer carbon coating layer contains graphene having a D/G ratio of 0.35 or less in the Raman spectrum.

[FIG. 1]

15.0kV 10.1mm x2.00k SE(M)    20.0um

EP 4 020 632 A1

**Description**

**TECHNICAL FIELD**

**Cross-reference to Related Applications**

This application claims the benefit of Korean Patent Application No. 10-2019-0138874, filed on November 1, 2019, in the Korean Intellectual Property Office, the disclosure of which is incorporated herein in its entirety by reference.

**Technical Field**

The present invention relates to a negative electrode active material, and a method for preparing the same, and a negative electrode and a lithium secondary battery including the same.

**BACKGROUND ART**

Recently, the demand for a small and lightweight secondary battery having a relatively high capacity is rapidly increased due to the rapid spread of electronic devices using batteries, such as cell phones, notebook computers, electric vehicles, and the like. Particularly, a lithium secondary battery is lightweight and has a high energy density, and thus, is attracting attention as a driving power source for portable devices. Therefore, research and development efforts for improving the performance of a lithium secondary battery have been actively conducted.

Typically, a lithium secondary battery includes a positive electrode, a negative electrode, a separator interposed between the positive electrode and the negative electrode, an electrolyte, an organic solvent, and the like. In addition, a positive electrode and a negative electrode may have an active material layer including a positive electrode active material or a negative electrode active material on a current collector. In the positive electrode, a lithium-containing metal oxide such as $LiCoO_2$, and $LiMn_2O_4$ is used as a positive electrode active material, and accordingly, in the negative electrode, a carbon-based active material or a silicon-based active material not containing lithium is used as a negative electrode active material.

Particularly, among negative electrode active materials, a silicon-based active material is attracting attention in that it has a capacity of about 10 times higher than that of a carbon-based negative electrode active material, and due to the high capacity thereof, the silicon-based active material has the advantage of being able to achieve a high energy density even with a thin electrode. However, a silicon-based active material has a problem in that the lifespan properties are degraded because a conductive path is blocked due to the volume expansion/contraction according to charge/discharge, and the high-temperature storage properties are deteriorated due to side reactions with an electrolyte solution during high-temperature storage.

Therefore, there is a demand for the development of a secondary battery capable of improving lifespan properties and high-temperature storage properties while implementing the high capacity and high energy density of a silicon-based active material.

Korean Patent Laid-Open No. 10-2017-0074030 relates to a negative electrode active material for a lithium secondary battery, a method for preparing the same, and a lithium secondary battery including the same, and discloses a negative electrode active material including a porous silicon-carbon composite. However, there is a limit in solving the above-mentioned problems.

[Prior Art Document]

[Patent Document]

Korean Patent Laid-open Publication No. 10-2017-0074030

**DISCLOSURE OF THE INVENTION**

**TECHNICAL PROBLEM**

An aspect of the present invention provides a negative electrode active material capable of effectively prevent the degradation in electrical contact between active materials due to the volume expansion/contraction of an active material and improving lifespan properties in using a silicon-based active material.

Another aspect of the present invention provides a negative electrode active material capable of preventing side reactions with an electrolyte solution and improving high-temperature storage properties in using a silicon-based active material.

Yet another aspect of the present invention provides a method for preparing the above-described negative electrode active material.

Still yet another aspect of the present invention provides a negative electrode and a secondary battery including the above-described negative electrode active material.

## TECHNICAL SOLUTION

According to an aspect of the present invention, there is provided a negative electrode active material including a silicon-based core particle and an outer carbon coating layer formed on the silicon-based core particle, wherein the outer carbon coating layer contains graphene having a D/G ratio of 0.35 or less in the Raman spectrum represented by Equation 1 below.

$$[Equation\ 1]$$

$$D/G = D\ band\ peak\ intensity\ /\ G\ band\ peak\ intensity$$

According to another aspect of the present invention, there is provided a method for preparing the above-described negative electrode active material, wherein the method includes mixing silicon-based core particles and graphene flakes, and heat-treating the mixture.

According to another aspect of the present invention, there is provided a negative electrode including a negative electrode current collector and a negative electrode active material layer formed on the negative electrode current collector, wherein the negative electrode active material layer includes a negative electrode material containing the above-described negative electrode active material, a binder, and a conductive material.

According to another aspect of the present invention, there is provided a secondary battery including the negative electrode described above, a positive electrode opposing the negative electrode, a separator interposed between the negative electrode and the positive electrode, and an electrolyte.

## ADVANTAGEOUS EFFECTS

A negative electrode active material of the present invention includes an outer carbon coating layer formed on a silicon-based core particle, and the outer carbon coating layer contains graphene having a D/G ratio of a specific range in the Raman spectrum. Graphene used in the negative electrode active material of the present invention is low in defects and excellent in electrical conductivity, and thus, may smoothly maintain the electrical contact between an active material and an active material, or between an active material and a current collector even when there is volume expansion/contraction of a silicon-based active material.

In addition, the negative electrode active material of the present invention includes graphene having a D/G ratio of a specific range in an outer carbon coating layer, and thus, may prevent side reactions with an electrolyte solution and improve high-temperature storage properties.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

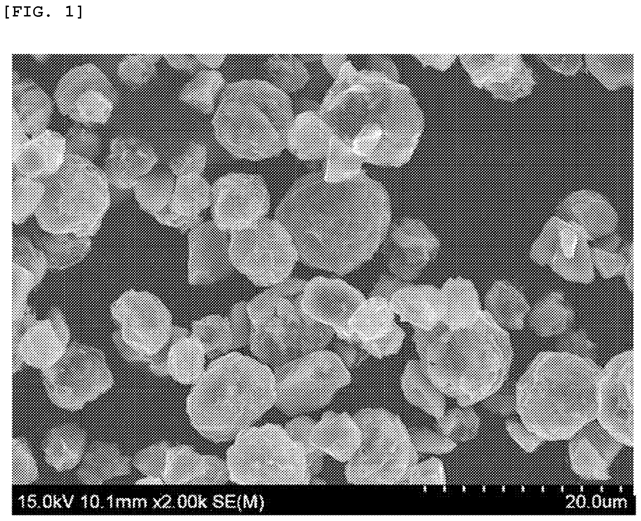

FIG. 1 is a photograph of a negative electrode active material prepared in Example 1 and observed by a scanning electron microscope (SEM).

## MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

It will be further understood that the terms "include", "comprise", or "have" when used in this specification, specify the presence of stated features, numbers, steps, elements, or combinations thereof, but do not preclude the presence or addition of one or more other features, numbers, steps, elements, or combinations thereof.

In the present specification, an average particle diameter ($D_{50}$) may be defined as a particle diameter corresponding to 50% of the volume accumulation in a particle diameter distribution curve of a particle. The average particle diameter ($D_{50}$) may be measured by, for example, a laser diffraction method. The laser diffraction method generally enables measurement of a particle diameter from a sub-micron region to several millimeters, so that results of high reproducibility and high resolution may be obtained.

Hereinafter, the present invention will be described in detail.

**<Negative electrode active material>**

The present invention relates to a negative electrode active material. The negative electrode active material may be preferably used for a lithium secondary battery.

The negative electrode active material of the present invention includes a silicon-based core particle and an outer carbon coating layer formed on the silicon-based core particle, wherein the outer carbon coating layer contains graphene having a D/G ratio of 0.35 or less in the Raman spectrum represented by Equation 1 below.

$$[\text{Equation 1}]$$

$$\text{D/G = D band peak intensity / G band peak intensity}$$

Typically, a silicon-based active material is known to have a capacity of about 10 times higher than that of a carbon-based active material, and accordingly, when the silicon-based active material is applied to a negative electrode, it is expected that a thin-film electrode which is thin but has a high level of energy density may be implemented. However, a silicon-based active material has a problem of electrical short circuit and lifespan deterioration due to the volume expansion/contraction caused by the intercalation/de-intercalation of lithium according to charge/discharge. Particularly, when there is volume expansion/contraction of a silicon-based active material due to charge/discharge, the distance between active materials increases, causing electrical contact to be degraded and electrical short circuit to occur. Accordingly, the movement path of charges is lost and lithium ions are isolated, which may cause the rapid lifespan degradation and capacity reduction of a negative electrode.

In order to solve the above limitation, the negative electrode active material of the present invention includes a silicon-based core particle and an outer carbon coating layer formed on the silicon-based core particle, wherein the outer carbon coating layer contains graphene having a D/G ratio of 0.35 or less. Graphene having a D/G ratio of the above range is low in defects and excellent in electrical conductivity, and thus, when applied to an outer carbon coating layer, the initial efficiency of a negative electrode active material may be improved, and the electrical contact may be maintained or improved despite the expansion/contraction of the silicon-based core particle, so that lifespan properties may be improved to an excellent level. In addition, an outer carbon coating layer containing graphene having a D/G ratio of the above range prevents side reaction with an electrolyte solution to an excellent level, and thus, may improve the high-temperature storage properties of a negative electrode active material.

The silicon-based core particle is capable of intercalation/de-intercalation of lithium, and may function as a core particle of a negative electrode active material.

The silicon-based core particle may include a silicon-based material represented by Chemical Formula 1 below, and at least one metal included in the silicon-based material and selected from the group consisting of Li, Mg and Al.

$$[\text{Chemical Formula 1}] \qquad \text{SiOx}$$

In Chemical Formula 1 above, $0 \leq x < 2$.

In Chemical Formula 1 above, $SiO_2$(when x=2 in Chemical Formula 1 above) does not react with lithium ions, and thus, cannot store lithium, so that it is preferable that x is within the above range. Specifically, in Chemical Formula 1 above, in terms of structural stability of an active material, x may be $0.5 \leq x \leq 1.5$.

The metal is included in the silicon-based material, and is at least one selected from the group consisting of Li and Mg. The metal may be contained in terms of increasing the efficiency of an active material by lowering the ratio of the irreversible phase of the silicon-based core particle (for example, $SiO_2$), and may be at least one selected from the group consisting of Li, Mg, and Al, preferably at least one selected from the group consisting of Li and Mg, and more preferably Mg.

The metal may be included in the silicon-based core particle in an amount of 1 wt% to 30 wt%, preferably 3 wt% to 20 wt%, and when in the above range, it is preferable in that the capacity and efficiency of the silicon-based core particle may be simultaneously improved to a desirable level.

The silicon-based core particle may be a mixture of Si, $SiO_2$ and a metal silicate including at least one metal selected from the group consisting of Li, Mg, and Al. For example, a metal in the silicon-based core particle may react with a silicon oxide in the silicon-based core particle and be present in the form of metal silicate.

The average particle diameter ($D_{50}$) of the silicon-based core particles may be 0.5 $\mu$m to 20 $\mu$m, preferably 1 $\mu$m to 10 $\mu$m in terms of ensuring the structural stability of an active material during charge/discharge, preventing the level of volume expansion/contraction from increasing due to the excessive increase in particle diameter, and preventing initial efficiency from decreasing due to an excessively small particle diameter.

The silicon-based core particles may be included in the negative electrode active material in an amount of 80 wt% to 99.9 wt%, preferably 85 wt% to 95 wt%. When in the above range, it is preferable in terms of improving the capacity of a negative electrode, and effects of electrical short circuit prevention by an outer carbon coating layer to be described later, electrical conductivity improvement, and lifespan properties improvement may be more preferably implemented, accordingly.

The outer carbon coating layer is formed on the silicon-based core particle.

The outer carbon coating layer contains graphene having a D/G ratio of 0.35 or less in the Raman spectrum represented by Equation 1 below.

$$[\text{Equation 1}]$$

$$\text{D/G ratio} = \text{D band peak intensity} / \text{G band peak intensity}$$

The D/G ratio is used as an indicator for evaluating defects or crystallinity of graphene. In the Raman spectrum, a G band peak near 1590 cm$^{-1}$ is due to an $E_{2g}$ vibrational mode of a sp$^2$ coupling of carbon, and a D band peak near 1350 cm$^{-1}$ appears when there is a defect in the sp$^2$ coupling of carbon.

The outer carbon coating layer of the present invention includes graphene having a D/G ratio of 0.35 or less, and thus, may be low in graphene defects and excellent in electrical conductivity performance. Accordingly, the outer carbon coating layer of the present invention may prevent an electrical short circuit problem due to the expansion/contraction of silicon-based core particles, thereby improving the lifespan performance of a battery, and improving initial efficiency. In addition, when graphene having a D/G ratio of the above range is used as a component of an outer carbon coating layer, a graphene material is low in defects, so that side reactions with an electrolyte solution may be prevented to an excellent level, and accordingly, the high-temperature storage performance of a negative electrode active material may be improved. If graphene having a D/G ratio greater than 0.35 is used, defects in graphene increase, thereby decreasing electrical conductivity, so that it is not possible to prevent the electrical short circuit problem of silicon-based core particles and to expect lifespan performance improvement.

The D/G ratio of the graphene may be 0.35 or less, preferably 0.01 to 0.35, and more preferably 0.05 to 0.25, and when in the above range, the degradation in dispersibility and coating properties of graphene due to an excessive decrease in D/G ratio may be prevented to further improve the above-described lifespan properties, initial efficiency, electrical conductivity, and high-temperature storage performance.

The D/G ratio of the graphene may be implemented by appropriately controlling the number of times a graphite-based material, which is a raw material of graphene, passes through and circulates a micro-channel in a high-pressure homogenizer, the applied pressure in the high-pressure homogenizer, and the rate and time of passing through the micro-channel, and the like, when preparing the graphene via use of the high-pressure homogenizer.

The thickness of the outer carbon coating layer may be 10 nm to 500 nm, preferably 30 nm to 200 nm, and when in the above range, the capacity degradation of a negative electrode active material due to an excessive increase in thickness may be prevented, side reactions with an electrolyte solution may be prevented to a more desired level, and the electrical short circuit problem of silicon-based core particles may be prevented. The thickness of the outer carbon coating layer may be measured, for example, through a transmission electron microscope (TEM).

The outer carbon coating layer may be included in the negative electrode active material in an amount of 1 wt% to 25 wt%, preferably 3 wt% to 15 wt%, and more preferably 6 wt% to 12 wt%. When in the above range, the decrease in capacity of the negative electrode active material due to an excessive increase in the content of the outer carbon coating layer may be prevented, side reactions with an electrolyte solution may be prevented to a more desired level, and the electrical short circuit problem of silicon-based core particles may be prevented.

The negative electrode active material of the present invention may further include an inner carbon coating layer formed between the silicon-based core particle and the outer carbon coating layer. The inner carbon coating layer may suppress the volume expansion of silicon-based core particles, and may function as a protection layer for further preventing side reactions with an electrolyte solution.

The inner carbon coating layer may be included in an amount of 1 wt% to 10 wt%, preferably 3 wt% to 7 wt%, based on the weight of the silicon-based core particle and the inner carbon coating layer, and when in the above range, it is preferable in that the inner carbon coating layer may prevent side reactions with an electrolyte solution while controlling the volume expansion of the silicon-based core particle to an excellent level.

The inner carbon coating layer may be an amorphous carbon coating layer. Specifically, the inner carbon coating layer may be formed by a chemical vapor deposition (CVD) method using at least one hydrocarbon gas selected from the group consisting of methane, ethane, and acetylene.

**<Method for preparing negative electrode active material>**

Also, the present invention provides a method for preparing the above-described negative electrode active material.

Specifically, the method for preparing a negative electrode active material of the present invention includes mixing silicon-based core particles and graphene flakes, and heat-treating the mixture.

The method for preparing a negative electrode active material of the present invention includes mixing silicon-based core particles and graphene flakes.

The silicon-based core particles have been described above.

The graphene flakes may be mixed with the silicon-based core particles and then heat-treated to be a component of an outer carbon coating layer.

Specifically, the graphene flakes may be prepared by a method including the following steps.

(a) forming a dispersion solution including a graphite-based material and a dispersant; and
(b) allowing the dispersion solution to continuously pass through a high-pressure homogenizer via an inlet thereof, the high-pressure homogenizer including the inlet, an outlet, and a micro-channel connecting the inlet and the outlet, thereby de-laminating the graphene flakes in the graphite-based material.

According to the above method, the graphene flakes may be de-laminated from a graphite-based material by shearing force in the high-pressure homogenizer. In the case of the above method, a process for graphene de-lamination is simplified and a process causing defects in graphene such as acid treatment is not involved, so that it is possible to prepare graphene with fewer defects. In addition, in the case of the above method, there is an advantage in that graphene has fewer defects and excellent electrical conductivity compared to a method for de-laminating graphene by ultrasonic treatment, a method for obtaining graphene by preparing oxidized graphite and re-reducing the same, and the like. Accordingly, when an outer carbon coating layer of a negative electrode active material is formed with graphene flakes obtained by the above method, electrical conductivity may be improved while preventing electrical short circuit of silicon-based core particles to an excellent level, so that lifespan properties may be improved.

The method for preparing graphene flakes includes (a) forming a dispersion solution including a graphite-based material and a dispersant.

The dispersion solution may be one in which a graphite-based material and a dispersant are dissolved or dispersed in an aqueous solvent or polar organic solvent. The aqueous solvent or polar organic solvent may be one or more selected from the group consisting of water, NMP, acetone, N,Ndimethylformamide (DMF), Dimethyl sulfoxide (DMSO), ethanol, isopropyl alcohol, methanol, butanol, 2-ethoxy ethanol, 2-butoxy ethanol, 2-methoxy propanol, tetrahydrofuran (THF), ethylene glycol, pyridine, dimethylacetamide, N-vinylpyrrolidone, methyl ethyl ketone (butanone), alpha-terpinol, formic acid, ethyl acetate, and acrylonitrile.

The graphite-based material is a raw material of graphene flakes, and may be, for example, plate-shaped graphite.

As the dispersant, any material which has been known to be used to uniformly disperse various carbon-based materials in a polar solvent, such as tanic acid, polyacrylic acid, or trade name Triton X-100 or Pluronics F-127, and the like, may be used. However, more suitably, as a mixture of a plurality of polyaromatic hydrocarbon oxides, a dispersant including a mixture in which a polyaromatic hydrocarbon oxide having a molecular weight of about 300 to 1,000, preferably 300 to 700 is included in an amount of about 60 wt% or greater, preferably 65 wt% or greater, more preferably 70 wt to 95 wt%, may be used. Specifically, the dispersant may be polyacrylic acid.

The method for preparing graphene flakes includes (b) allowing the dispersion solution to continuously pass through a high-pressure homogenizer via an inlet thereof, the high-pressure homogenizer including the inlet, an outlet, and a micro-channel connecting the inlet and the outlet, thereby de-laminating the graphene flakes in the graphite-based material.

The high-pressure homogenizer may include an inlet into which a dispersion solution is injected, a micro-channel through which the injected dispersion solution is continuously passed, and an outlet through which graphene flakes prepared in the micro-channel are obtained. The graphite-based material may pass through the micro-channel under the application of shearing force to be de-laminated, thereby forming graphene flakes having a nano-scale thickness. When graphene flakes are prepared in the high-pressure homogenizer, it is possible to continuously obtain graphene flakes without a separate pre-treatment process, so that it is possible to mass produce graphene flakes having no defects, thereby having excellent electrical conductivity.

The dispersion solution may be introduced into the inlet of the high-pressure homogenizer under a pressure of 100 bar to 3,000 bar, more preferably 500 bar to 1,500 bar and pass through the micro-channel. When the dispersion solution is passed through the micro-channel in the above pressure range, high shearing force may be obtained since the rate of passing of the dispersion solution increases by high pressure, and accordingly, the de-lamination of graphene flakes may be achieved without defects.

The diameter of the micro-channel may be about 1 mm or less, preferably 10 to 800 $\mu$m, and when the dispersion solution is passed through in the above range, high shearing force may be implemented. Such shearing force facilitates de-lamination between carbon atomic layers in which carbon atoms are bonded by Van der Waals bonding rather than in the Basal plane of a graphite-based material forming a covalent bond, so that graphene flakes which are thin and are low in defects may be effectively formed.

In the above method, the D/G ratio of the graphene flakes may be controlled to be 0.35 or less, preferably 0.01 to 0.35, and more preferably 0.05 to 0.25 by appropriately controlling the number of micro-channel circulation in the high-pressure homogenizer, the applied pressure, and the rate and time of passing through the micro-channel, and the like.

The method for preparing a negative electrode active material of the present invention includes heat-treating the mixture.

According to the preparation method of the present invention, the combination of silicon-based core particles and graphene flakes may be performed by the heat-treatment step, and accordingly, an outer carbon coating layer containing graphene may be formed on the silicon-based core particles.

Specifically, the heat-treatment may be performed by spray-drying. The spray-drying process is a method for preparing dry powder by spraying a liquid feed and rapidly heat-treating or drying the same with a hot gas. It is preferable that the negative electrode active material of the present invention is heat-treated by the above spray-drying process because a mixture may be rapidly heat-treated or dried, thereby preventing the agglomeration between particles and improving the quality uniformity of the negative electrode active material.

Specifically, the heat-treatment may be performed by injecting an inert gas of 150°C to 350°C into a drying chamber while spraying the mixture into the drying chamber.

In the spray-drying process, the inert gas is a nonreactive gas, and may be at least one selected from the group consisting of helium, nitrogen, and argon.

In the spray-drying process, the temperature of the inert gas may be 150 °C to 350°C, preferably 180°C to 250°C. When heat-treatment is performed in the above range, the drying of a mixture is facilitated, and a negative electrode active material having improved quality uniformity may be prepared.

The method for preparing a negative electrode active material of the present invention may further include forming an inner carbon coating layer on the silicon-based core particles before mixing the silicon-based core particles and the graphene flakes. The inner carbon coating layer may be formed on the silicon-based core particles to suppress the volume expansion of the silicon-based core particles due to charge/discharge and to function as a protection layer for preventing side reactions with an electrolyte solution.

The step of forming the inner carbon coating layer may be performed by a chemical vapor deposition (CVD) method, and may specifically be performed by a chemical vapor deposition (CVD) method using at least one hydrocarbon gas selected from the group consisting of methane, ethane, and acetylene. The inner carbon coating layer may be formed on the silicon-based core particles to a uniform level according to the above method, so that volume expansion of the silicon-based core particles may be smoothly controlled and side reactions due to an electrolyte solution may be prevented.

The step of forming the inner carbon coating layer may be performed at 800°C to 1,100°C, preferably 900°C to 1,000°C.

Other descriptions of the inner carbon coating layer have been given above.

**<Negative electrode>**

In addition, the present invention provides a negative electrode including the negative electrode active material described above.

Specifically, the negative electrode of the present invention includes a negative electrode current collector and a negative electrode active material layer formed on the negative electrode current collector, wherein the negative electrode active material layer includes a negative electrode material, a binder, and a conductive material, and the negative electrode material includes the above-described negative electrode active material.

The negative electrode current collector is not particularly limited as long as it has conductivity without causing a chemical change in the battery. Specifically, copper, stainless steel, aluminum, nickel, titanium, fired carbon, copper or stainless steel that is surface-treated with one of carbon, nickel, titanium, silver, and the like, an aluminum-cadmium alloy, and the like may be used as the negative electrode current collector.

The negative electrode current collector may typically have a thickness of 3 $\mu$m to 500 $\mu$m.

The negative electrode current collector may have microscopic irregularities formed on the surface thereof to improve the adhesion of the negative electrode active material. For example, the negative electrode current collector may be used in various forms such as a film, a sheet, a foil, a net, a porous body, a foam, and a non-woven body.

The negative electrode active material layer is formed on the negative electrode current collector.

The negative electrode active material layer may include a negative electrode material and a binder, and the negative electrode material includes the above-described negative electrode active material.

The negative electrode active material may be included in the negative electrode to exhibit excellent capacity properties, and may contribute to improving the lifespan properties of the negative electrode by using graphene having a D/G ratio of the above range as a coating layer component.

The negative electrode active material has been described above.

The negative electrode material may further include a carbon-based active material together with the above-described negative electrode active material, and accordingly, the carbon-based active material having a low degree of volume expansion according to charge/discharge may reduce the degree of volume expansion of the entire negative electrode material, and is more preferable for improving resistance and efficiency.

The carbon-based active material may include at least one selected from the group consisting of artificial graphite, natural graphite, hard carbon, soft carbon, carbon black, acetylene black, Ketjen black, Super P, graphene, and fibrous carbon, and may preferably include at least one selected from the group consisting of artificial graphite and natural graphite.

The average particle diameter ($D_{50}$) of the carbon-based active material may be 5 $\mu$m to 35 $\mu$m, preferably 10 $\mu$m to 20 $\mu$m, in terms of ensuring structural stability during charge/discharge and decreasing side reactions with an electrolyte solution.

Specifically, in terms of simultaneously improving capacity properties and cycle properties, it is preferable that the negative electrode material uses both the negative electrode active material and the carbon-based active material. Specifically, it is preferable that the negative electrode material includes the negative electrode active material and the carbon-based active material in a weight ratio of 1:99 to 35:65, preferably 5:95 to 30:70, and more preferably 10:90 to 20:80. When in the above range, it is preferable in terms of simultaneously improving capacity and cycle properties.

The negative electrode material may be included in the negative electrode active material layer in an amount of 80 wt% to 99 wt%, preferably 90 wt% to 98.5 wt%.

The negative electrode active material layer includes a binder.

In terms of further improving electrode adhesion and imparting resistance sufficient for volume expansion/contraction of an active material, the binder may include at least one selected from the group consisting of styrene butadiene rubber (SBR), acrylonitrile butadiene rubber, acrylic rubber, butyl rubber, fluoro rubber, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM). Preferably, in terms of having high strength, having excellent resistance to volume expansion/contraction of a silicon-based active material, and imparting excellent flexibility to a binder to prevent twisting, bending, and the like of an electrode, it is preferable that the binder includes styrene-butadiene rubber.

The binder may be included in a negative electrode active material layer in an amount of 0.5 wt% to 10 wt%. When in the above range, it is preferable in terms of more effectively controlling the volume expansion of an active material.

If necessary, the negative electrode active material layer may further include a conductive material. The conductive material may be used to improve conductivity of a negative electrode, and a conductive material which has conductivity without causing a chemical change is preferred. Specifically, the conductive material may be at least one selected from the group consisting of natural graphite, artificial graphite, carbon black, acetylene black, Ketjen black, channel black, furnace black, lamp black, and thermal black, conductive fiber, fluorocarbon powder, aluminum powder, nickel powder, zinc oxide, potassium titanate, titanium oxide, and a polyphenylene derivative, and may preferably include carbon black in terms of implementing high conductivity.

The conductive material may be included in the negative electrode active material layer in an amount of 0.5 wt% to 10 wt%.

The negative electrode active material layer may be 30 $\mu$m to 100 $\mu$m, preferably 40 $\mu$m to 80 $\mu$m in terms of

increasing electrical contact for components of a negative electrode material due to the above-described SWCNT, and the like.

The negative electrode may be manufactured by dispersing a negative electrode material, a binder, and a conductive material in a solvent for forming a negative electrode slurry to prepare a negative electrode slurry, coating the negative electrode slurry on the negative electrode current collector, followed by drying and roll-pressing.

The solvent for forming a negative electrode slurry may include at least one selected from the group consisting of distilled water, ethanol, methanol, and isopropyl alcohol, preferably distilled water, in terms of facilitating the dispersion of components.

**<Secondary battery>**

The present invention provides a secondary battery including the negative electrode described above, specifically, a lithium secondary battery.

Specifically, the secondary battery according to the present invention includes the negative electrode described above, a positive electrode opposing the negative electrode, a separator interposed between the negative electrode and the positive electrode, and an electrolyte.

The positive electrode may include a positive electrode current collector and a positive electrode active material layer formed on the positive electrode current collector.

The positive electrode current collector is not particularly limited as long as it has conductivity without causing a chemical change in the battery. Specifically, copper, stainless steel, aluminum, nickel, titanium, fired carbon, copper or stainless steel that is surface-treated with one of carbon, nickel, titanium, silver, and the like, an aluminum-cadmium alloy, and the like may be used as the positive electrode current collector.

The positive electrode current collector may typically have a thickness of 3 $\mu$m to 500 $\mu$m.

The positive electrode current collector may have microscopic irregularities formed on the surface thereof to improve the adhesion of the positive electrode active material. For example, the positive electrode current collector may be used in various forms such as a film, a sheet, a foil, a net, a porous body, a foam, and a non-woven body.

The positive electrode active material layer may include a positive electrode active material.

The positive electrode active material is a compound capable of reversible intercalation and de-intercalation of lithium, and specifically, may include a lithium transition metal composite oxide including at least one transition metal selected from the group consisting of nickel, cobalt, manganese, and aluminum, and lithium, preferably a lithium transition metal composite oxide including a transition metal containing nickel, cobalt, or manganese, and lithium.

More specifically, the lithium transition metal composite oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (wherein 0<Y<1), $LiMn_{2-z}Ni_zO_4$ (wherein 0<Z<2), etc.), a lithium-nickel-cobalt-based oxide (e.g., $LiNi_{1-Y1}Co_{Y1}O_2$ (wherein 0<Y1<1), etc.), a lithium-manganese-cobalt-based oxide (e.g., $LiCo_{1-Y2}Mn_{Y2}O_2$ (wherein 0<Y2<1), $LiMn_{2-z1}Co_{z1}O_4$ (wherein 0<Z1<2, etc.), a lithium-nickel-manganese-cobalt-based oxide (e.g., $Li(Ni_pCo_qMn_{r1})O_2$ (wherein 0<p<1, 0<q<1, 0<r1<1, p+q+r1=1) or $Li(Ni_{p1}Co_{q1}Mn_{r2})O_4$ (wherein 0<p1<2, 0<q1<2, 0<r2<2, p1+q1+r2=2, etc.), or a lithium-nickel-cobalt-transition metal (M) oxide (e.g., $Li(Ni_{p2}Co_{q2}Mn_{r3}A_{s2})O_2$ (wherein M is selected from the group consisting of Al, Fe, V, Cr, Ti, Ta, Mg, and Mo, and p2, q2, r3, and s2 are each an atomic fraction of independent elements, and 0<p2<1, 0<q2<1, 0<r3<1, 0<s2<1, p2+q2+r3+s2=1, etc.) and the like, and any one thereof or a mixture of two or more thereof may be included. Among these, in terms of being able to increase the capacity and stability of a battery, the lithium transition metal composite oxide may be $LiCoO_2$, $LiMnO_2$, $LiNiO_2$, a lithium nickel-manganese-cobalt oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, etc.), or a lithium-nickel-cobalt-aluminum oxide (e.g., $Li(Ni_{0.8}Co_{0.15}Al_{0.05})O_2$, etc.), and the like. When considering an remarkable improvement effect according to the control of type and content ratio of constituent elements forming a lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and the like, and any one thereof or a mixture of two or more thereof may be used.

The positive electrode active material may be included in the positive electrode active material layer in an amount of 80 wt% to 99 wt%, preferably 92 wt% to 98.5 wt% in consideration of exerting sufficient capacity of the positive electrode active material.

The positive electrode active material layer may further include a binder and/or a conductive material in addition to the positive electrode active material described above.

The binder is a component for assisting in binding of an active material, a conductive material, and the like, and binding to a current collector, and specifically, may include at least one selected from the group consisting of a polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, and fluorine rubber, preferably polyvinylidene fluoride.

The binder may be included in the positive electrode active material layer in an amount of 1 wt% to 20 wt%, preferably 1.2 wt% to 10 wt% in terms of securing sufficient binding force between components such as a positive electrode active material.

The conductive material may be used to assist and improve conductivity in the secondary battery, and is not particularly limited as long as it has conductivity without causing a chemical change. Specifically, the conductive material may include graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon powder; metal powder such as aluminum powder and nickel powder; a conductive whisker such as zinc oxide and potassium titanate; a conductive metal oxide such as titanium oxide; and a polyphenylene derivative, and may preferably include carbon black in terms of improving conductivity.

The conductive material may be included in the positive electrode active material layer in an amount of 1 wt% to 20 wt%, preferably 1.2 wt% to 10 wt% in terms of securing sufficient electrical conductivity.

The thickness of the positive electrode active material layer may be 30 $\mu$m to 400 $\mu$m, preferably 50 $\mu$m to 110 $\mu$m.

The positive electrode may be manufactured by coating a positive electrode active material slurry including a positive electrode active material, and selectively, a binder, a conductive material, and a solvent for forming a positive electrode slurry on the positive electrode current collector, followed by drying and roll-pressing.

The solvent for forming a positive electrode slurry may include an organic solvent such as N-methyl-2-pyrrolidone (NMP), and may be used in an amount such that a preferred viscosity is achieved when the positive electrode active material, and selectively, the binder, the conductive material, and the like are included. For example, the solvent for forming a positive electrode slurry may be included in the positive electrode slurry in an amount such that the concentration of a solid including the positive electrode active material, and selectively, the binder and the conductive material is 50 wt% to 95 wt%, preferably 70 wt% to 90 wt%.

The separator is to separate the negative electrode and the positive electrode and to provide a movement path for lithium ions. Any separator may be used without particular limitation as long as it is a separator commonly used in a secondary battery. Particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may be used in a single-layered or a multi-layered structure, selectively.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethyl methyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above solvents, a carbonate-based solvent is preferable, and a mixture of a cyclic carbonate (e.g., ethylene carbonate or propylene carbonate) having a high ionic conductivity and a high dielectric constant, which may increase charging/discharging performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the linear carbonate are mixed in a volume ratio of about 1:1 to about 1:9.

Any compound may be used as the lithium salt without particular limitation as long as it may provide lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

According to a typical method for manufacturing a secondary battery, the secondary battery may be manufactured by interposing a separator between the negative electrode and the positive electrode described above, and then injecting an electrolyte solution thereto.

The secondary battery according to the present invention is useful for portable devices such as a mobile phone, a notebook computer, and a digital camera, and in the field of electric vehicles such as a hybrid electric vehicle (HEV), and in particular, may be preferably used as a component battery for a medium-to-large-sized battery module. Therefore, the present invention also provides a medium-to-large-sized battery module including the secondary battery as described above as a unit cell.

A medium-to-large-sized battery module as described above may be preferably applied to a power source which requires high output and large capacity, such as an electric vehicle, a hybrid electric vehicle, and a power storage device.

Hereinafter, Examples of the present invention will be described in detail so that those skilled in the art may easily carry out the present invention. However, the present invention may be embodied in many different forms, and is not limited to Examples set forth herein.

## Examples

Example 1: Preparation of negative electrode active material

<Preparation of graphene flakes>

Plate-shaped graphite as a graphite-based material and polyacrylic acid as a dispersant were dispersed in water in a weight ratio of 95:5 to prepare a dispersion solution (Solid content: 5 wt%).

1 L of the dispersion solution was introduced into an inlet of a high-pressure homogenizer under the application of a pressure of 1,000 bar, wherein the high-pressure homogenizer includes the inlet, an outlet, and a micro-channel (diameter: 100 $\mu$m) connecting between the inlet and the outlet, and the dispersion solution was passed through and circulated in the micro-channel at a rate of 100 m/s for 30 minutes. Through the above, the plate-shaped graphite was de-laminated to prepare graphene flakes.

The D/G ratio of the graphene flakes prepared above was calculated (D/G ratio = 0.2) by the Raman spectrum of a Raman spectrometer (Trade name: Microscope Raman, manufacturer: Almega XR).

<Preparation of negative electrode active material>

As silicon-based core particles, SiO particles (Average particle diameter ($D_{50}$): 6 $\mu$m) including Mg thereinside were prepared. The silicon-based core particles contain Mg in an amount of 5 wt% based on the total weight, and the silicon-based core particles is a mixture of Si, $SiO_2$, and magnesium silicate ($MgSiO_3$, and/or $Mg_2SiO_4$).

Methane as a hydrocarbon gas was subjected to chemical vapor deposition (CVD) at 950°C on the silicon-based core particles to form an inner carbon coating layer on the silicon-based core particles. The inner carbon coating layer was formed to 5 wt% based on the total weight of the silicon-based core particles and the inner carbon coating layer.

The silicon-based core particles having the inner carbon coating layer and graphene flakes were mixed in a weight ratio of 95:5.

The mixture was heat-treated by a spray-drying method. Specifically, the mixture was sprayed into a drying chamber through a sprayer while injecting an argon gas of 200°C into the drying chamber to perform rapid heat-treatment on the mixture, and the heat-treated mixture was recovered to prepare a negative electrode active material of Example 1. The negative electrode active material includes silicon-based core particles and an inner carbon coating layer formed on the silicon-based core particles, and an outer carbon coating layer formed on the inner carbon coating layer, wherein the outer carbon coating layer contains graphene having a D/G ratio of 0.2. The outer carbon coating layer was included in the negative electrode active material in an amount of 5 wt%.

Example 2: Preparation of negative electrode active material

A negative electrode active material of Example 2 was prepared in the same manner as in Example 1 except that silicon-based core particles having the inner carbon coating layer and graphene flakes were mixed in a weight ratio of 90:10. In the negative electrode active material, the outer carbon coating layer was included in the negative electrode active material in an amount of 10 wt%. In addition, the graphene flakes used in Example 2 and graphene contained in the outer carbon coating layer had a D/G ratio of 0.2.

Example 3: Preparation of negative electrode active material

A negative electrode active material of Example 3 was prepared in the same manner as in Example 1 except that silicon-based core particles having the inner carbon coating layer and graphene flakes were mixed in a weight ratio of 97.5:2.5. In the negative electrode active material, the outer carbon coating layer was included in the negative electrode active material in an amount of 2.5 wt%. In addition, the graphene flakes used in Example 3 and graphene contained in the outer carbon coating layer had a D/G ratio of 0.2.

Example 4: Preparation of negative electrode active material

A negative electrode active material of Example 4 was prepared in the same manner as in Example 1 except that silicon-based core particles having the inner carbon coating layer and graphene flakes were mixed in a weight ratio of 80:20. In the negative electrode active material, the outer carbon coating layer was included in the negative electrode active material in an amount of 20 wt%. In addition, the graphene flakes used in Example 4 and graphene contained in the outer carbon coating layer had a D/G ratio of 0.2.

Example 5: Preparation of negative electrode active material

A negative electrode active material of Example 5 was prepared in the same manner as in Example 1 except that the time during which the dispersion solution passed through and circulated in the micro-channel was changed to 5 minutes in the preparation of the graphene flakes of Example 1.
The graphene flakes prepared above and graphene contained in the outer carbon coating layer had a D/G ratio of 0.03.

Example 6: Preparation of negative electrode active material

A negative electrode active material of Example 6 was prepared in the same manner as in Example 1 except that the time during which the dispersion solution passed through and circulated in the micro-channel was changed to 60 minutes in the preparation of the graphene flakes of Example 1.
The graphene flakes prepared above and graphene contained in the outer carbon coating layer had a D/G ratio of 0.3.

Comparative Example 1: Preparation of negative electrode active material

Silicon-based core particles having the inner carbon coating layer of Example 1 were used as a negative electrode active material of Comparative Example 1.

Comparative Example 2: Preparation of negative electrode active material

<Preparation of graphene flakes>

A negative electrode active material of Comparative Example 2 was prepared in the same manner as in Example 1 except that the time during which the dispersion solution passed through and circulated in the micro-channel was changed to 120 minutes in the preparation of the graphene flakes of Example 1.
The D/G ratio of the graphene flakes prepared above was calculated (D/G ratio = 0.45) by the Raman spectrum of a Raman spectrometer.

<Preparation of negative electrode active material>

The negative electrode active material of Comparative Example 2 was manufactured in the same manner as in Example 1 except that the graphene flakes prepared above were used. The D/G ratio of graphene contained in the outer carbon coating layer of Comparative Example 2 was 0.45.

Comparative Example 3: Preparation of negative electrode active material

<Preparation of graphene flakes>

A graphene oxide was formed by the Hummer's method which is known in the art. Specifically, potassium

permanganate($KMnO_4$) was added to an aqueous solution in which graphite, sodium nitrate, and sulfuric acid were mixed to form the graphene oxide (graphene flakes).

The D/G ratio of the graphene flakes prepared above was calculated (D/G ratio = 1) by the Raman spectrum of a Raman spectrometer. With the method for preparing graphene by the formation of graphene oxide, it is difficult to control defects of graphene, so that the D/G ratio is very large.

<Preparation of negative electrode active material>

The negative electrode active material of Comparative Example 3 was manufactured in the same manner as in Example 1 except that the graphene flakes prepared above were used. The D/G ratio of graphene contained in the outer carbon coating layer of Comparative Example 3 was 1.

**Experimental Examples**

<Manufacturing of negative electrode>

As a negative electrode material, a mixture in which the negative electrode active material prepared in Example 1 and artificial graphite (Average particle diameter ($D_{50}$): 20 $\mu$m) as a carbon-based active material were mixed in a weight ratio of 10:90 was used.

The negative electrode material, styrene-butadiene rubber as a binder, Super C-65 as a conductive material, and CMC as a thickener were mixed in a weight ratio of 96:2:1:1, and the mixture was added to distilled water as a solvent for forming a negative electrode slurry to prepare a negative electrode slurry.

The negative electrode slurry was coated on one surface of a copper current collector (Thickness: 15 $\mu$m), which is a negative electrode current collector, with a loading amount of 3 mAh/cm$^2$, roll-pressed, and then dried in a vacuum oven at 130°C for 10 hours to form a negative electrode active material layer (Thickness: 60 $\mu$m), which was used as a negative electrode according to Example 1 (Thickness of the negative electrode: 75 $\mu$m).

In addition, a negative electrode of each of Examples 2 to 6 and Comparative Examples 1 to 3 was manufactured in the same manner as in Example 1 except that the negative electrode active material of each of Examples 2 to 6 and Comparative Examples 1 to 3 was used instead of the negative electrode active material of Example 1.

<Manufacturing of secondary battery>

A lithium metal counter electrode was used as a positive electrode.

A porous polyethylene separator was interposed between the negative electrode of each of Examples 1 to 6 and Comparative Examples 1 to 3 manufactured above and the positive electrode, and an electrolyte solution was injected thereto to manufacture a coin-type half-cell secondary battery.

As the above electrolyte solution, a solution prepared by dissolving vinylene carbonate (VC) to 0.5 wt% in a solution in which ethyl methyl carbonate (EMC) and ethylene carbonate (EC) were mixed in a volume ratio of 7:3, followed by dissolving $LiPF_6$ to a concentration of 1 M therein was used.

**Experimental Example 1: SEM photograph evaluation**

In FIG. 1, a photograph of a negative electrode active material prepared in Example 1 and taken by a scanning electron microscope (SEM) is shown.

Referring to FIG. 1, it can be confirmed that an outer carbon coating layer containing graphene is formed on silicon-based core particles.

**Experimental Example 2: Lifespan properties evaluation**

<Capacity retention rate evaluation>

The secondary battery manufactured in each of Examples 1 to 6 and Comparative Examples 1 to 3 was subjected to cycle capacity retention rate evaluation using an electrochemical charge/discharge device.

The secondary batteries of Examples and Comparative Examples were charged and discharged under the following experimental conditions.

First cycle: Charging condition: CC/CV, 0.1 C charge 5 mV/0.005 C cut-off, Discharging condition: CC, 0.1 C discharge 1.5 V cut off

Second cycle: Charging condition: CC/CV, 0.1 C charge 5 mV/0.005 C cut-off, Discharging condition: CC, 0.1 C discharge 1.0 V cut off

Third or more cycles: Charging condition: CC/CV, 0.5 C charge 5 mV/0.005 C cut-off, Discharging condition: CC, 0.1 C discharge 1.0 V cut off

Thereafter, the capacity retention rate of the secondary battery was evaluated by Equation 2 below.

[Equation 2]

Capacity retention rate (%) = {(Discharge capacity in the N-th cycle) / (Discharge capacity at 1.0 V in the first cycle)} × 100

The capacity retention rate(%) of the 30-th cycle is shown in Table 1 below.

[Table 1]

|  | 30-th cycle capacity retention rate (%) |
| --- | --- |
| Example 1 | 91 |
| Example 2 | 94 |
| Example 3 | 87 |
| Example 4 | 88 |
| Example 5 | 81 |
| Example 6 | 82 |
| Comparative Example 1 | 70 |
| Comparative Example 2 | 73 |
| Comparative Example 3 | 70 |

Referring to Table 1, the negative electrode active materials of Examples which include graphene having a D/G ratio according to the present invention as an outer carbon coating layer component show excellent cycle capacity retention rates compared to Comparative Examples which have outer carbon coating layers different from those of Examples.

**Experimental Example 3: High-temperature storage capacity retention rate evaluation**

The secondary battery manufactured in each of Examples 1 to 6 and Comparative Examples 1 to 3 was evaluated for high-temperature storage capacity retention rate.

The high-temperature storage capacity retention rate is evaluated by storing the secondary battery in a fully charged state for 4 weeks, and performing charging and discharging under the following charging and discharging conditions.

Thereafter, the high-temperature storage capacity retention rate was calculated by Equation 3 below, and the results are shown in Table 2.

[Equation 3]

Capacity retention rate (%) = {(Discharge capacity at the third cycle) / (Discharge capacity at the first cycle)} × 100

[Table 2]

| | High-temperature storage capacity retention rate (%) |
|---|---|
| Example 1 | 93 |
| Example 2 | 95 |
| Example 3 | 89 |
| Example 4 | 90 |
| Example 5 | 84 |
| Example 6 | 83 |
| Comparative Example 1 | 75 |
| Comparative Example 2 | 76 |
| Comparative Example 3 | 75 |

Referring to Table 2, the negative electrode active materials of Examples which include graphene having a D/G ratio according to the present invention as an outer carbon coating layer component show excellent high-temperature storage performance compared to Comparative Examples which have outer carbon coating layers different from those of Examples.

**Claims**

1.  A negative electrode active material comprising:

    a silicon-based core particle; and
    an outer carbon coating layer formed on the silicon-based core particle, wherein
    the outer carbon coating layer contains graphene having a D/G ratio of 0.35 or less in Raman spectrum represented by Equation 1 below:

    [Equation 1]

    D/G ratio = D band peak intensity / G band peak intensity.

2.  The negative electrode active material of claim 1, wherein the D/G ratio of the graphene is 0.01 to 0.35.

3.  The negative electrode active material of claim 1, wherein the outer carbon coating layer is included in the negative electrode active material in an amount of 1 wt% to 25 wt%.

4.  The negative electrode active material of claim 1, wherein the silicon-based core particle comprises: a silicon-based material represented by Chemical Formula 1 below; and at least one metal included in the silicon-based material and selected from the group consisting of Li, Mg, and Al:

    [Chemical Formula 1]          $SiO_x$

    wherein in Chemical Formula 1 above, $0 \leq x < 2$.

5.  The negative electrode active material of claim 4, wherein the metal is included in an amount of 1 wt% to 30 wt% in the silicon-based core particle.

6.  The negative electrode active material of claim 1, further comprising an inner carbon coating layer formed between the silicon-based core particle and the outer carbon coating layer.

7.  A method for preparing the negative electrode active material according to claim 1, comprising:

mixing silicon-based core particles and graphene flakes; and
heat-treating the mixture.

8.  The method of claim 7, wherein the heat-treatment is performed by injecting an inert gas of 150°C to 350°C into a drying chamber while spraying the mixture into the drying chamber.

9.  The method of claim 7, wherein the graphene flakes are prepared by a method comprising the following steps:

(a) forming a dispersion solution including a graphite-based material and a dispersant; and
(b) allowing the dispersion solution to continuously pass through a high-pressure homogenizer via an inlet thereof, the high-pressure homogenizer including the inlet, an outlet, and a micro-channel connecting the inlet and the outlet, thereby de-laminating the graphene flakes in the graphite-based material.

10. The method of claim 9, wherein the dispersion solution is introduced into the inlet of the high-pressure homogenizer under a pressure of 100 bar to 3,000 bar and passes through the micro-channel.

11. The method of claim 9, wherein the graphite-based material is plate-shaped graphite.

12. A negative electrode comprising:

a negative electrode current collector; and
a negative electrode active material layer formed on the negative electrode current collector, wherein the negative electrode active material layer includes a negative electrode material containing the negative electrode active material according to claim 1, a binder, and a conductive material.

13. The negative electrode of claim 12, wherein:

the negative electrode material further comprises a carbon-based active material; and
the negative electrode material contains the negative electrode active material and the carbon-based active material in a weight ratio of 1:99 to 35:65.

14. A secondary battery comprising:

athe negative electrode according to claim 12;
a positive electrode opposing the negative electrode;
a separator interposed between the positive electrode and the negative electrode; and
an electrolyte.

[FIG. 1]

15.0kV 10.1mm x2.00k SE(M)                          20.0um

## INTERNATIONAL SEARCH REPORT

| International application No. |
| --- |
| **PCT/KR2020/015004** |

### A. CLASSIFICATION OF SUBJECT MATTER

**H01M 4/36**(2006.01)i; **H01M 4/48**(2010.01)i; **H01M 4/38**(2006.01)i; **H01M 4/62**(2006.01)i; **H01M 4/587**(2010.01)i; **H01M 4/131**(2010.01)i; **C01B 32/19**(2017.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/36(2006.01); C01B 31/04(2006.01); C01B 32/05(2017.01); C01B 32/182(2017.01); H01M 10/0525(2010.01); H01M 4/38(2006.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 활물질(active material), 코어-쉘(core-shell), 실리콘(silicone), 그래핀(graphene)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2019-0116011 A (DAE JOO ELECTRONIC MATERIALS CO., LTD.) 14 October 2019 (2019-10-14)<br>  See claims 1, 18 and 21; and paragraph [0093]. | 1-14 |
| Y | KR 10-2013-0037090 A (SAMSUNG SDI CO., LTD.) 15 April 2013 (2013-04-15)<br>  See claims 1, 4 and 6. | 1-14 |
| Y | US 2019-0051894 A1 (HUAWEI TECHNOLOGIES CO., LTD.) 14 February 2019 (2019-02-14)<br>  See claims 1 and 2. | 6 |
| Y | KR 10-2018-0134680 A (INDUSTRY ACADEMY COOPERATION FOUNDATION OF SEJONG UNIVERSITY) 19 December 2018 (2018-12-19)<br>  See claims 1, 7, 12 and 17; and paragraph [0030]. | 7-11 |
| Y | WO 2015-099457 A1 (LG CHEM, LTD.) 02 July 2015 (2015-07-02)<br>  See claims 1, 3 and 10. | 9-11 |

☐ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 February 2021** | **09 February 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2020/015004**

| Patent document cited in search report | | | Publication date (day/month/year) | Patent family member(s) | | | Publication date (day/month/year) |
|---|---|---|---|---|---|---|---|
| KR | 10-2019-0116011 | A | 14 October 2019 | | None | | |
| KR | 10-2013-0037090 | A | 15 April 2013 | CN | 103107335 | A | 15 May 2013 |
| | | | | EP | 2579365 | A1 | 10 April 2013 |
| | | | | EP | 2579365 | B1 | 28 November 2018 |
| | | | | JP | 2013-084601 | A | 09 May 2013 |
| | | | | JP | 6207143 | B2 | 04 October 2017 |
| | | | | KR | 10-1708360 | B1 | 21 February 2017 |
| | | | | US | 2013-0089784 | A1 | 11 April 2013 |
| US | 2019-0051894 | A1 | 14 February 2019 | CN | 107302082 | A | 27 October 2017 |
| | | | | EP | 3444876 | A1 | 20 February 2019 |
| | | | | KR | 10-2018-0132136 | A | 11 December 2018 |
| | | | | WO | 2017-177808 | A1 | 19 October 2017 |
| KR | 10-2018-0134680 | A | 19 December 2018 | KR | 10-1942654 | B1 | 25 January 2019 |
| WO | 2015-099457 | A1 | 02 July 2015 | CN | 105849040 | A | 10 August 2016 |
| | | | | CN | 105849040 | B | 02 January 2018 |
| | | | | EP | 3056469 | A1 | 17 August 2016 |
| | | | | JP | 2017-502900 | A | 26 January 2017 |
| | | | | JP | 6300930 | B2 | 28 March 2018 |
| | | | | KR | 10-1682007 | B1 | 02 December 2016 |
| | | | | KR | 10-2015-0076105 | A | 06 July 2015 |
| | | | | TW | 201538422 | A | 16 October 2015 |
| | | | | TW | I543932 | B | 01 August 2016 |
| | | | | US | 2017-0166449 | A1 | 15 June 2017 |
| | | | | US | 9950930 | B2 | 24 April 2018 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190138874

- KR 1020170074030